Europäisches Patentamt

European Patent Office

Office européen des brevets

(11) Veröffentlichungsnummer: **0 326 781 B1**

## EUROPÄISCHE PATENTSCHRIFT

(45) Veröffentlichungstag der Patentschrift: **11.11.92**

(21) Anmeldenummer: **88730025.9**

(22) Anmeldetag: **05.02.88**

(51) Int. Cl.5: **B41J 9/26**, H01F 7/18, B41J 2/30

(54) **Ansteuerung für Drucker.**

(43) Veröffentlichungstag der Anmeldung:
**09.08.89 Patentblatt 89/32**

(45) Bekanntmachung des Hinweises auf die Patenterteilung:
**11.11.92 Patentblatt 92/46**

(84) Benannte Vertragsstaaten:
**AT BE CH DE FR GB IT LI NL**

(56) Entgegenhaltungen:
EP-A- 0 028 090
DE-A- 3 139 502
DE-A- 3 151 242

PATENT ABSTRACTS OF JAPAN, Band 11, Nr. 250 (M-616)[2697], 14. August 1987; JP-A-62 59 051 (CANON INC.) 14-03-1987

PATENT ABSTRACTS OF JAPAN, Band 7, Nr. 140 (E-182)[1285], 18. Juni 1983; JP-A-58 54 611 (FUJITSU K.K.) 31-03-1983

(73) Patentinhaber: **MANNESMANN Aktiengesell-schaft**
**Mannesmannufer 2**
**W-4000 Düsseldorf 1(DE)**

(72) Erfinder: **Grüner, Manfred**
**Eichenhang 45**
**W-7900 Ulm(DE)**
Erfinder: **Gugel, Bernd**
**Höhenblick 10**
**W-7900 Ulm-Einsingen(DE)**
Erfinder: **Stempfle, Johann**
**Erbishofener Strasse 19**
**W-7914 Pfaffenhofen(DE)**

(74) Vertreter: **Presting, Hans-Joachim, Dipl.-Ing. et al**
**Meissner & Meissner Patentanwaltsbüro**
**Herbertstrasse 22**
**W-1000 Berlin 33(DE)**

**Beschreibung**

Die Erfindung betrifft eine Ansteuerung für Drucker, insbesondere für Matrixdrucker der Nadel- bzw. Hammerbauart, mit jedem Druckelement zugeordneter Elektromagnetspule, jeweils einem dem Elektromagnetkern gegenüberliegenden magnetisierbaren federnden Anker bzw. für Klappanker-Druckköpfe mit starrem Anker, mit jeweils an diesem befestigtem Druckelement und einem bei eingeschalteter Elektromagnetspule von deren Magnetfeld in dem Sinn durchflutenden Dauermagneten oder einer mechanischen Feder bei Klappankerdruckköpfen, daß der Dauermagnet bzw. die mechanische Feder bei ausgeschalteter Elektromagnetspule den federnden Anker bzw. den starren Anker in einer rückwärtigen Abschußposition hält und daß bei bestromter Elektromagnetspule das Magnetfeld des Dauermagneten aufgehoben bzw. die Kraft der mechanischen Feder überwunden ist und daß dabei der federnde Anker bzw. der starre Anker mit dem Druckelement in eine vordere Druckposition abgeschossen wird, ferner mit einer Strombegrenzungsschaltung für den Strom in der Elektromagnetspule, in der über eine relativ hohe Spannung ein ansteigender Strom begrenzt wird wobei der Strom durch die Elektromagnetspule eine nach einer ersten Impulsdauer bis auf Null abfallende Stromflanke aufweist, sowie mit einem die elektrische Energie der Elektromagnetspule speichernden Kondensator.

In einem Matrixdrucker werden im Betrieb die Elektromagnetspule einer Drucknadel (Nadeldruckkopf) bzw. von Druckhämmern (Hammerbankdrucker) bestromt, um die Nadeln bzw. Druckhämmer zu veranlassen, über einzelne Punktabdrucke Schriftzeichen auf dem Aufzeichnungsträger abzubilden. Die Frequenz des Systems, bestehend aus der Elektromagnetspule, einem metallischen Magnetkern, einer Ankerfeder sowie einer an der Ankerfeder befestigten Nadel, in Verbindung mit dem Aufbau der Zeichenmatrix, ist direkt proportional zur erreichbaren Schreibgeschwindigkeit des Druckers. Die Frequenz dieses Systems ist durch die Zeit bestimmt, die die Nadel benötigt, aus der Ruhestellung in die Arbeitsstelung und wieder zurück zur Ruhestellung zu gelangen, um für den nächsten Punktabdruck wieder startbereit zu sein. Diese Frequenz des Magnetsystems ist wiederum stark abhängig von der Zeit, die benötigt wird, um die Spannung an der Elektromagnetspule abzubauen. Die auftretenden Schwierigkeiten bei der Ansteuerung eines Magnetsystems bestehen darin, daß der Strom, der durch die Elektromagnetspule während der tatsächlichen Ansteuerungszeit fließt, nicht sofort nach dem Wegnehmen der Ansteuerungsspannung abbricht. Die Induktivität der Elektromagnetspule ist bestrebt, den Strom in der bisherigen Richtung aufrechtzuerhalten. Aus diesem Grund steigt die Spannung am abgeschalteten Anschluß der Elektromagnetspule (DE-PS 31 39 502). Dadurch erfolgt die Entladung des Kondensators nach einer Zeitkonstante RC, so daß das System von den mechanischen Bauteilen der Druckkopfseite abhängt. Das bedingt eine Langsamere Druckfrequenz.

Eine Strombegrenzungsschaltung innerhalb von Treiberschaltungen für Drucker, mit einem Drucksignale und Startsignale erzeugenden Zeichengenerator, ist aus der DE-OS 31 51 242 bekannt. Drucksignal und Startsignal sind am Signaleingang durch UND-Gatter verknüpft. Ferner sind jeweils an die UND-Gatter angeschlossene, monostabile Kippstufen vorgesehen, die jeweils ein Zeitglied aufweisen und deren Ausgänge über Ansteuer-Gatter separat mit der Basis von Ansteuertransistoren verbunden sind, deren Emitter über Basiswiderstände jeweils an der Basis von Transistoren liegen, wobei deren Kollektor bzw. deren Emitter an Spannungsstufen schaltbar sind und wobei an einem der Transistoren die Treiber-Magnetspule für die abzuschießende Nadel bzw. den Hammer vorgesehen ist. Derartige Strombegrenzungsschaltungen halten den Strom im Endbereich einer Zeit ansteigenden Stroms auf einer vorbestimmten Höhe und schalten nach einer Zeit gleichbleibender Stromstärke ab, so daß der Stromverlauf an der Treiber-Magnetspule näherungsweise ein ungleichschenkliges Trapez bildet.

Das System Elektromagnetspule - Dauermagnet bewirkt grundsätzlich gegenüber Matrixdruckköpfen in Klappankerbauweise eine höhere Frequenz, so daß eine stetige Entwicklung schneller druckender Druckköpfe geschaffen werden konnte. Die Frequenz derartiger Druckköpfe liegt bei ca. 2 kHz, und es werden Frequenzen von bis zu 3500 bis 4000 Hz angestrebt.

Der Erfindung liegt daher die Aufgabe zugrunde, die Betreiberfrequenz bei derartigen Elektromagnetspulen-Dauermagnet-Systemen bzw. Elektromagnetspulen-Klappanker-Systemen weiter zu steigern.

Die gestellte Aufgabe wird bei der eingangs bezeichneten Ansteuerung erfindungsgemäß sowohl für Dauermagnetköpfe als auch Klappankerköpfe dadurch gelöst, daß auf eine an die erste Impulsdauer zur Aktivierung des Ankers sich eine zweite Zeitdauer anschließt, innerhalb der der Kondensator geladen wird und daß für den Kondensator eine Entladedauer für die Rückspeisung des Entladestroms aus dem Kondensator in die Elektromagnetspule und über einen Widerstand und einen Transistor, der zur Zeitdauer durchgeschaltet ist in den Kondensator zurück vorgesehen ist, zur Beschleunigung des Ankers in seine Ruhestellung. Neben einer variablen ersten Impulsdauer wird hier ein schneller Stromabfall in der Elektromagnetspule erzielt und nach einer anschließenden Ladedauer wird ein Strom entgegengesetzt zur vorherigen Stromrichtung durch die Elektromagnetspule geschickt, was in dieser Anwendung auch eine vorteilhafte Verstärkung des Dauermagnetfeldes zur Folge hat.

In Ausgestaltung der Erfindung ist vorgesehen, daß die Entladedauer für den Kondensator einstellbar ist.

Für die Verwirklichung der Erfindung stehen sowohl analoge als auch digitale Schaltungen zur Verfügung. Eine besonders vorteilhafte Ansteuerung nach der Erfindung ergibt sich dadurch, daß zwischen einem Zeichengenerator und der Elektromagnetspule jeweils digitale Zeitglieder für die Impulsdauer, die Ladedauer und die Entladedauer vorgesehen sind, wobei aus einem Eingangssignal an einem Ausgang des Zeitgliedes mit Verzögerungsglied für die Impulsdauer ein erstes Ausgangssignal erzeugbar ist und für die Steuerung einer Vortreiberstufe der Strombegrenzungsschaltung dient und wobei ein über das Eingangssignal und über mit den Zeitgliedern verbundene Verzögerungsglieder ein zweites Ausgangssignal erzeugbar ist, das über eine zweite Vortreiberstufe und einen Transistor an eine Lade- bzw. Entladestufe für den Kondensator bzw. die Elektromagnetspule angeschlossen ist.

Eine Verbesserung der Erfindung besteht darin, daß die Lade- bzw. Entladestufe aus einer parallel zum Kondensator geschalteten Zenerdiode, einem an den Kollektor des Transistors mit seiner Basis angeschlossenen Transistor besteht, der mit seinem Kollektoranschluß über einen einstellbaren Widerstand mit dem Kondensator und mit der Zenerdiode, mit seiner Basis über eine Diode mit dem Kondensator und mit seinem Emitter über eine Diode mit der Zenerdiode und der Elektromagnetspule verbunden ist und daß die Elektromagnetspule mit ihrem zweiten Anschluß mit dem Kondensator und dem kondensatorseitigen Anschluß mit der Zenerdiode verbunden ist.

Ein Ausführungsbeispiel der Erfindung ist in der Zeichnung dargestellt und wird im folgenden näher beschrieben. Es zeigen

Fig. 1a ein Elektromagnetspulen-Dauermagnet-System in der rückwärtigen Abschußposition (Null-Stellung) sowie in Fig. 1b das zugehörige Strom-Zeit-Diagramm,

Fig. 2a das Elektromagnetspulen-Dauermagnet-System während der Bestromung der Elektromagnetspule und Fig. 2b das zugehörige Strom-Zeit-Digramm bzw. ein Zeit-Weg-Diagramm für den Anker bzw. das Druckelement,

Fig. 3a das Elektromagnetspulen-Dauermagnet-System bei Abschalten des Stromes der Elektromagnetspule und Fig. 3b das zugehörige Strom-Zeit-Diagramm und ein Zeit-Weg-Diagramm für den Anker bzw. das Druckelement,

Fig. 4a das Elektromagnetspulen-Dauermagnet-System gemäß der Erfindung nach dem Abschalten der Bestromung der Elektromagnetspule und Fig. 4b das zugehörige Strom-Zeit-bzw. Zeit-Weg-Diagramm für den Anker bzw. das Druckelement;

Fig. 5 einen Schaltplan für die Erzeugung der Eingangs- und Ausgangssignale im Bereich der Zeitglieder,

Fig. 6a ein Spannungs-Zeit-Diagramm für die Impulsdauer,

Fig. 6b ein Spannungs-Zeit-Diagramm für die Ladedauer,

Fig. 6c ein Spannungs-Zeit-Diagramm für die einstellbare Entladedauer und

Fig. 7 die an die Signalausgänge Phi 1 und Phi 2 anschließende Schaltung für die Strombegrenzung bzw. für die Lade- bzw. Entladestufe.

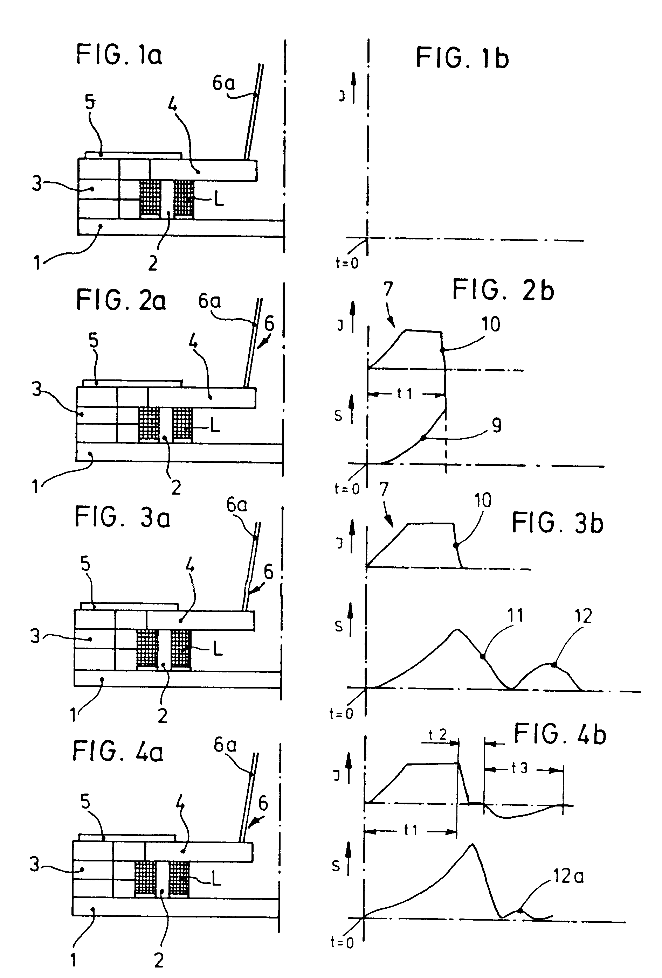

Das Elektromagnetspulen-Dauermagnet-System (ein Ausführungsbeispiel für einen Klappanker-Druckkopf mit einer mechanischen Feder und dem erwähnten starren Anker ist nicht gezeichnet und beschrieben, da ein solcher Klappankerdruckkopf bekannt ist und anstelle eines Dauermagneten die mechanische Feder in gleicher Funktion wirkt) besteht in seiner Grundform (Fig. 1a bis 4a) jeweils aus einer Grundplatte 1, einer Elektromagnetspule L mit Elektromagnetkern 2, aus einem Dauermagneten 3, einem zumindest teilweise, im Bereich gegenüberliegend zum Elektromagnetkern 2 magnetisierbaren Anker 4, der federnd ist. Die Federkraft kann aus einer Federplatte bzw. einem Federarm 5 erzeugt werden. An dem Anker 4 ist ein Druckelement 6, z.B. eine Drucknadel 6a, befestigt.

Gemäß Fig. 1a ist die Elektromagnetspule L unbestromt. Aus diesem Grund hält der Dauermagnet 3 den Anker 4 fest am Elektromagnetkern 2. Dieser Zustand ist im Strom-Zeit-Diagramm (Fig. 1b) durch t = Null gekennzeichnet.

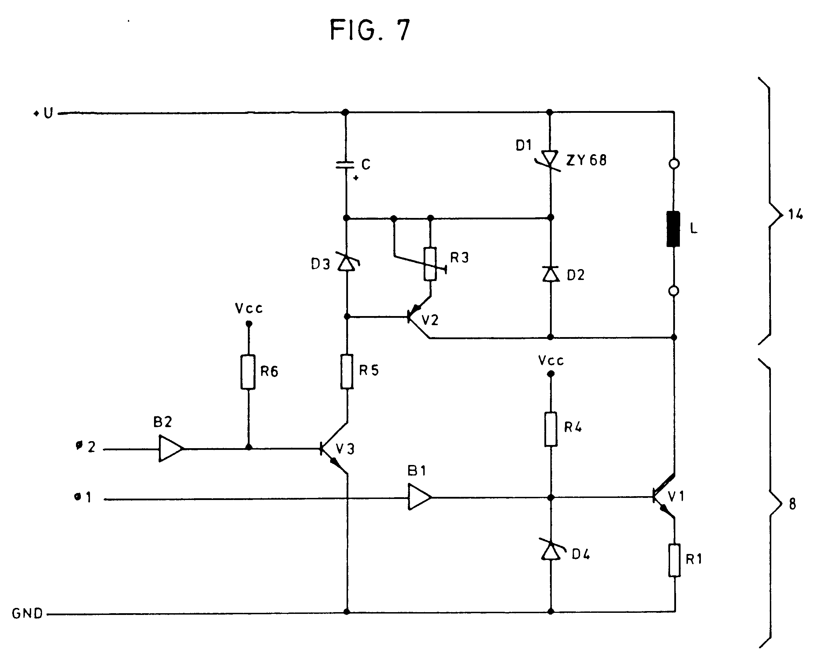

Gemäß Fig. 2a wird die Elektromagnetspule L bestromt, so daß das Elektromagnetfeld das Magnetfeld bzw. den Magnetfluß des Dauermagneten 3 aufhebt und die Federkraft des Federarms 5 das Druckelement 6 abschießen läßt. Der Stromverlauf 7 ist aufgrund einer noch zu erläuternden Strombegrenzungsschaltung 8 (Fig. 7) in der Höhe begrenzt und bricht nach der Impulsdauer t1 ziemlich schroff ab. Dementsprechend ist der Weg-Zeitverlauf 9 des Druckelements 6 bzw. des Ankers 4 dargestellt (Fig. 2b). Die steil abfallende Stromflanke 10 bildet hierzu die Ursache.

Nach diesem Abfall der Stromflanke 10, schwingt das Druckelement 6 und ein gewisser federnder Teil des Ankers 4 in der in Fig. 3b gezeigten Weise (Weg-Zeit-Diagramm), so daß die Schwingungskurve 11 entsteht. Hierbei treten unerwünschte Abschnitte, wie z.B. der Kurvenverlauf 12 auf.

In diesem Stadium (Fig. 3a und 4a) greift die Wirkung der Erfindung ein.

Gemäß dem Strom-Zeit-Diagramm (Fig. 4b) wird nach einer Ladedauer t2 für den Kondensator C eine Entladedauer t3 negativer Bestromung vorgesehen. Dadurch ist der Kurvenverlauf 12 des Weg-Zeit-Diagramms zu einer kaum noch ins Gewicht fallenden Impulskurve 12a verkleinert. Damit sind abträgliche Nachschwingerscheinungen des Ankers 4 bzw. des Druckelementes 6 derart weitgehend beseitigt, daß jedes einzelne Druckelement um ca. 10 bis 15 % schneller gegenüber bisher für einen nächsten Abschuß bereitsteht.

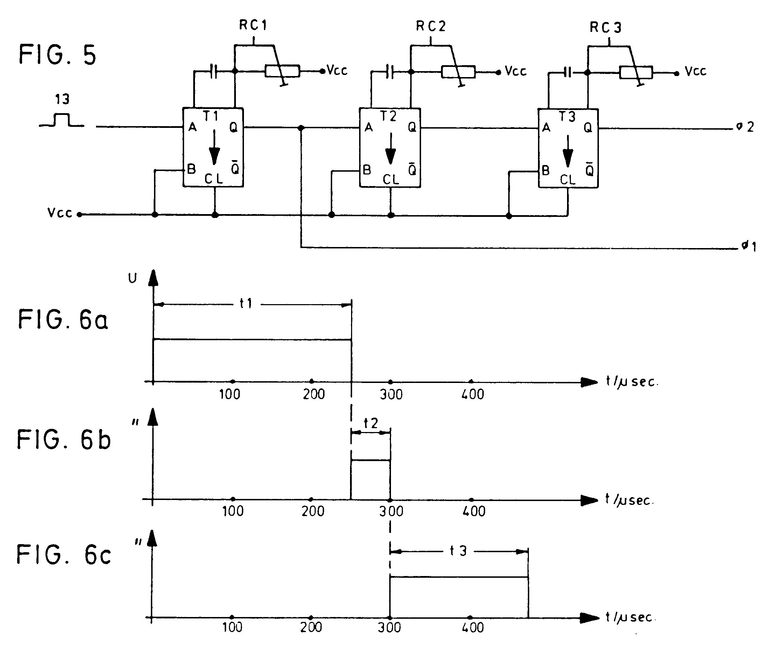

Eine besonders vorteilhafte Schaltung der Ansteuerung ist in den Fig. 5 und 7 dargestellt. Aus einem nicht weiter gezeichneten Zeichengenerator (Fig. 5) gelangt das Eingangssignal 13 durch ein digitales Zeitglied T1, an dem ein Verzögerungsglied RC1 angeschlossen ist, an einen Ausgang Q und wird vor Eintritt in das weitere Zeitglied T2 abgenommen und bildet das Signal Phi 1 (Fig. 5). Über das Zeitglied T1 wird die Impulsdauer t1 gemäß Fig. 6a bestimmt über ein Zeitglied T2 mit einstellbarem Verzögerungsglied RC2 und über den dortigen Ausgang Q wird die Ladedauer t2 (Fig. 6b) bestimmt und über das Zeitglied T3 mit Verzögerungsglied RC3 die einstellbare Entladedauer t3 (Fig. 6c). Dies ergibt ein zweites Ausgangssignal Phi 2 (Fig. 5).

Für das dargestellte Ausführungsbeispiel beträgt z.B. die Impulsdauer t1 = 250 Mikrosekunden, die Ladedauer t2 = 50 Mikrosekunden und die Entladedauer t3 = 150 Mikrosekunden. Diese Werte können sich auch je nach den Verhältnissen des Elektromagnetspulen-Dauermagnet-Systems (bzw. eines Klappanker-Systems) ändern.

Sobald nunmehr der Eingang A des Zeitgliedes T1 mit dem Eingangssignal 13 angesteuert wird, wird der Ausgang Q (Signal Phi 1) auf Logisch "1" gesetzt. Dieses Signal steuert über eine Vortreiberstufe B1 einen Transistor V1 auf (Fig. 7). Der jetzt ansteigende Strom durch einen Widerstand R1, das Zeitglied T1 und durch die Elektromagnetspule L wird durch die Strombegrenzungsschaltung 8, bestehend aus der Diode D4 und dem Widerstand R1 sowie dem Transistor V1 begrenzt, wie aus den Fig. 2b, 3b und 4b ersichtlich ist.

Nach Ablauf der Impulsdauer t1 wird der Transistor V1 gesperrt, indem der Stromfluß durch den Transistor V1 selbst unterbrochen wird. Die in der Induktivität der Elektromagnetspule L gespeicherte elektrische Energie wird sehr schnell, weil dieser Stromkreis sehr niederohmig ist, über eine Diode D2 in die Kapazität des Kondensators C umgeladen. Eine Zenerdiode D1 begrenzt hierbei die Spannung U am Kondensator C und dient als Schutz gegen Überspannung am Transistor V1, dessen Basisstrom durch den Widerstand R4 bestimmt wird. Gleichzeitig nach Ablauf der Impulsdauer t1 wird das Zeitglied T2 gestartet, welches nach Ablauf das Zeitglied T3 aktiviert und die Energierückspeisung wie folgt einleitet:

Mit dem Ausgangssignal Phi 2 wird ein Transistor V3 über eine zweite Vorteiberstufe B2, die mit einem Ansteuerwiderstand R6 versehen ist, aufgesteuert. Dadurch wird ein Transistor V2 über einen Widerstand R5 leitend und der Entladestrom fließt vom Kondensator C über den einstellbaren Widerstand R3, den Transistor V2 und die Induktivität der Elektromagnetspule L zurück in den Kondensator C, bis dieser entladen bzw. die Entladedauer t3 abgelaufen ist. Mit dem Widerstand R3, einer Zenerdiode D3 und dem Transistor V2 kann der Entladestrom begrenzt werden bzw. auf die erforderliche Größe eingestellt werden. Der Transistor V2, die Zenerdiode D1, die Diode D2, die Zenerdiode D3 und der Widerstand R3 bilden die erwähnte Lade- bzw. Entladestufe 14.

**Patentansprüche**

1. Ansteuerung für Drucker, insbesondere für Matrixdrucker der Nadel-bzw. Hammerbauart, mit jedem Druckelement (6) zugeordneter Elektromagnetspule (L), jeweils einem dem Elektromagnetkern (2) gegenüberliegenden magnetisierbaren, federnden Anker (4) bzw. für Klappanker-Druckköpfe mit starrem Anker, mit jeweils an diesem befestigtem Druckelement (6) und einem bei eingeschalteter Elektromagnetspule (L) von deren Magnetfeld in dem Sinn durchflutenden Dauermagneten (3) oder einer mechanischen Feder bei Klappankerdruckköpfen, daß der Dauermagnet (3) bzw. die mechanische Feder bei ausgeschalteter Elektromagnetspule (L) den federnden Anker (4) bzw. den starren Anker in einer rückwärtigen Abschußposition hält und daß bei bestromter Elektromagnetspule (L) das Magnetfeld des Dauermagneten (3) aufgehoben bzw. die Kraft der mechanischen Feder überwunden ist und daß dabei der federnde Anker (4) bzw. der starre Anker mit dem Druckelement (6) in eine vordere Druckposition abgeschossen wird, ferner mit einer Strombegrenzungsschaltung (8) für den Strom in der Elektromagnetspule (L), in der über eine relativ hohe Spannung ein ansteigender Strom begrenzt wird wobei der Strom durch die Elektromagnetspule (L) eine nach einer ersten Impulsdauer (t1) bis auf Null abfallende Stromflanke aufweist, (10) sowie mit einem die elektrische Energie der Elektromagnetspule (L) speichernden Kondensator (C), dadurch gekennzeichnet, daß auf eine an die erste Impulsdauer (t1) zur Aktivierung des Ankers (4) sich eine zweite Zeitdauer (t2) anschließt, innerhalb der der Kondensator (C) geladen wird und daß für den Kondensator (C) eine Entladedauer (t3) für die Rückspeisung des Entladestroms aus dem Kondensator (C) in die Elektromagnetspule (L) und über einen Widerstand (R3) und einen Transistor (V2), der zur Zeitdauer (t3) durchgeschaltet ist, in den Kondensator (C) zurück vorgesehen ist, zur Beschleunigung des Ankers (4) in seine Ruhestellung.

2. Ansteuerung nach Anspruch 1,
dadurch gekennzeichnet,
daß die Entladedauer (t3) für den Kondensator (C) einstellbar ist.

3. Ansteuerung nach den Ansprüchen 1 und 2,
dadurch gekennzeichnet,
daß zwischen einem Zeichengenerator und der Elektromagnetspule (L) jeweils digitale Zeitglieder (T1,T2,T3) für die Impulsdauer (t1), die Ladedauer (t2) und die Entladedauer (t3) vorgesehen sind, wobei aus einem Eingangssignal (13) an einem Ausgang (Q) des Zeitgliedes (T1) mit Verzögerungsglied (RC1) für die Impulsdauer (t1) ein erstes Ausgangssignal (Phi 1) erzeugbar ist und für die Steuerung einer Vortreiberstufe (B1) der Strombegrenzungsschaltung (8) dient und wobei ein über das Eingangssignal (13) und über mit den Zeitgliedern (T2,T3) verbundene Verzögerungsglieder (RC2 und RC3) ein zweites Ausgangssignal (Phi 2) erzeugbar ist, das über eine zweite Vortreiberstufe (B2) und einen Transistor (V3) an eine Lade-bzw. Entladestufe (14) für den Kondensator (C) bzw. die Elektromagnetspule (L) angeschlossen ist.

4. Ansteuerung nach Anspruch 3,
dadurch gekennzeichnet,
daß die Lade- bzw. Entladestufe (14) aus einer parallel zum Kondensator (C) geschalteten Zenerdiode (D1), einem an den Kollektor des Transistors (V3) mit seiner Basis angeschlossenen Transistor (V2) besteht, der mit seinem Kollektoranschluß über einen einstellbaren Widerstand (R3) mit dem Kondensator (C) und mit der Zenerdiode (D1), mit seiner Basis über eine Diode (D3) mit dem Kondensator (C) und mit seinem Emitter über eine Diode (D2) mit der Zenerdiode (D1) und der Elektromagnetspule (L) verbunden ist und daß die Elektromagnetspule (L) mit ihrem zweiten Anschluß mit dem Kondensator (C) und dem kondensatorseitigen Anschluß mit der Zenerdiode (D1) verbunden ist.

## Claims

1. Drive for printers, in particular for dot-matrix printers with a pin or hammer construction, with an electromagnetic coil (L) associated with each printing element (6), with a magnetisable sprung armature (4) opposite the electromagnetic core (2) in each case, or for folding armature printer heads with a rigid armature, with a printing element (6) fixed on said armature in each case and a pm (3), or a mechanical spring in the case of folding armature printer heads, through which pm (3) the mg field of the electromagnetic coil (L) flows when the latter is connected, in such a direction that the pm (3) or the mechanical spring keeps the sprung armature (4) or the rigid armature in a rear end position when the electromagnetic coil (L) is disconnected and that, when current is passing through the electromagnetic coil (L), the mg field of the pm (3) is cancelled or the force of the mechanical spring is overcome and that thus the spring armature (4) or the rigid armature shoots with the printing element (6) into a front printing position, further having a current limiting circuit (8) for the current in the electromagnetic coil (L), in which an increasing current is limited above a relatively high voltage, the current through the electromagnetic coil (L) having a current side which drops to zero after a first pulse duration (t1), and with a capacitor (C) for storing the electrical energy of the electromagnetic coil (L), characterised in that a second time duration (t2), within which the capacitor (C) is charged, follows the first pulse duration (t1) for actuating the armature (4), and in that a discharge time duration (t3) is provided for the capacitor (C) for feeding back the discharge current from the capacitor (C) into the electromagnetic coil (L) and via a resistor (R3) and a transistor (V2), which is switched through back into the capacitor (C) at the time duration (t3) in order to accelerate the armature (4) into its rest position.

2. Drive according to claim 1, characterised in that the discharge duration (t3) for the capacitor (C) is adjustable.

**3.** Drive according to claims 1 and 2, characterised in that between a signal generator and the electromagnetic coil (L) digital time elements (T1, T2, T3) are provided for the pulse duration (t1), the charging duration (t2) and the discharging duration (t3) respectively, wherein a first output signal ($\phi$1) can be generated from an input signal (13) at an output (Q) of the time element (T1) with a delay element (RC1) for the pulse duration (t1) and has the purpose of controlling a driver stage (B1) of the current limiting circuit (8), and wherein, via the input signal (13) and via delay elements (RC2 and RC3) connected to the time elements (T2, T3), a second output signal ($\phi$2) can be generated, which is connected via a second driver stage (B2) and a transistor (V3) to a charging or discharging stage (14) respectively for the capacitor (C) or the electromagnetic coil (L) respectively.

**4.** Drive according to claim 3, characterised in that the charging or discharging stage (14) respectively consists of a zener diode (D1) connected in parallel to the capacitor (C), and of a transistor (V2) whose base is connected to the collector of the transistor (V3) and which is connected by its collector terminal via an adjustable resistor (R3) to the capacitor (C) and to the zener diode (D1) and by its base via a diode (D3) to the capacitor (C), and by its emitter via a diode (D2) to the zener diode (D1) and the electromagnetic coil (L), and in that the electromagnetic coil (L) is connected by its second terminal to the capacitor (C) and by the capacitor-side terminal to the zener diode (D1).

## Revendications

**1.** Commande pour imprimante notamment pour des imprimantes matricielles du type à aiguilles ou à marteaux, comprenant une bobine électromagnétique (L) associée à chaque élément d'impression (6), une armature élastique (4) susceptible d'être magnétisée opposée à chaque noyau électromagnétique (2), ou une armature rigide pour une tête d'impression à armature basculante, un élément d'impression (6) fixé sur chaque armature et un aimant permanent (3) ou bien un ressort mécanique dans le cas de têtes d'impression à armature basculante, traversé par le champ magnétique de la bobine électromagnétique (L) lorsque celle-ci est alimentée, dans ce sens que lorsque la bobine électromagnétique (L) est hors de tension, l'aimant permanent (3) ou le ressort mécanique maintient l'armature élastique (4) ou l'armature rigide dans une position arrière de projection, et que lorsque la bobine électromagnétique (L) est parcourue par un courant, le champ magnétique de l'aimant permanent (3) est compensé ou bien la force du ressort mécanique est surmontée, et qu'à cette occasion l'armature élastique (4) ou l'armature rigide avec l'élément d'impression (6) est projetée dans une position avant d'impression, l'ensemble comportant en outre un circuit de limitation du courant (8) pour le courant dans la bobine électromagnétique (L), dans lequel, par une tension relativement élevée, un courant croissant est limité, le courant au travers de la bobine électromagnétique (L) présentant un flanc chutant jusqu'à zéro après une première durée d'impulsion (t1), et comportant également un condensateur (C) accumulant l'énergie électrique de la bobine électromagnétique (L), caractérisée
en ce qu'après la première durée d'impulsion (t1) pour actionner l'armature (4), suit une seconde durée (t2) au cours de laquelle le condensateur (C) est chargé, et en ce qu'ensuite il est prévu pour le condensateur (C) une durée de décharge (t3) pour le renvoi du courant de décharge du condensateur (C), dans la bobine électromagnétique (L), et le retour vers le condensateur (C) par l'intermédiaire d'une résistance (R3) et d'un transistor (V2) qui pendant la durée (t3) est passant, en vue d'accélérer l'armature (4) vers sa position de repos.

**2.** Commande selon la revendication 1, caractérisée
en ce que la durée de décharge (t3) pour le condensateur (C), est réglable.

**3.** Commande selon les revendications 1 et 2, caractérisée
en ce qu'entre un générateur de caractères et la bobine électromagnétique (L), sont prévus des organes de temps (T1, T2, T3) du type digital, respectivement pour la durée d'impulsion (t1), la durée de charge (t2) et la durée de décharge (t3), un premier signal de sortie (Phi 1) pouvant être engendré, à partir d'un signal d'entrée (13), au niveau d'une sortie (Q) de l'organe de temps (T1) comportant un organe de temporisation (RC1) pour la durée d'impulsion (t1), ce premier signal de sortie étant destiné à commander un étage de préamplification (B1) du circuit de limitation du courant (8), et un second signal de sortie (Phi 2) pouvant être engendré par l'intermédiaire du signal d'entrée (13) et par l'intermédiaire d'organes de temporisation (RC2 et RC3) reliés aux organes de temps (T2 et T3), ce second signal de sortie étant raccordé, par l'intermédiaire d'un second étage de pré-amplification (B2) et d'un transistor (V3), à un étage de charge et de décharge (14) pour le condensateur (C) et la bobine électromagnétique (L).

4. Commande selon la revendication 3, caractérisée
en ce que l'étage de charge et de décharge (14) est constitué par une diode Zener (D1) montée en parallèle avec le condensateur (C), et par un transistor (V2) qui est raccordé par sa base au collecteur du transistor (V3), par son collecteur et par l'intermédiaire d'une résistance réglable (R3), au condensateur (C) et à la diode Zener (D1), par sa base et par l'intermédiaire d'une diode (D3), au condensateur (C), et par son émetteur et par l'intermédiaire d'une diode (D2), à la diode Zener (D1) et à la bobine électromagnétique (L), et en ce que la bobine électromagnétique (L) est reliée par sa seconde borne au condensateur (C) et à la borne côté condensateur de la diode Zener (D1).

FIG. 1a

FIG. 1b

FIG. 2a

FIG. 2b

FIG. 3a

FIG. 3b

FIG. 4a

FIG. 4b

8

FIG. 5

FIG. 6a

FIG. 6b

FIG. 6c

FIG. 7